(19) Europäisches Patentamt / European Patent Office / Office européen des brevets

(11) **EP 4 507 052 A1**

(12) **EUROPEAN PATENT APPLICATION**
published in accordance with Art. 153(4) EPC

(43) Date of publication:
**12.02.2025 Bulletin 2025/07**

(21) Application number: **22960418.6**

(22) Date of filing: **30.09.2022**

(51) International Patent Classification (IPC):
***H01M 10/056*** *(2010.01)*

(52) Cooperative Patent Classification (CPC):
**H01M 10/056;** Y02E 60/10

(86) International application number:
**PCT/CN2022/123586**

(87) International publication number:
**WO 2024/065808 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology (Hong Kong) Limited**
**Central, Central And Western District (HK)**

(72) Inventors:
- **ZHANG, Cuiping**
  **Ningde, Fujian 352100 (CN)**
- **HAN, Changlong**
  **Ningde, Fujian 352100 (CN)**
- **FAN, Peng**
  **Ningde, Fujian 352100 (CN)**
- **ZHANG, Zhe**
  **Ningde, Fujian 352100 (CN)**

(74) Representative: **Laufhütte, Dieter**
**Lorenz Seidler Gossel**
**Rechtsanwälte Patentanwälte**
**Partnerschaft mbB**
**Widenmayerstraße 23**
**80538 München (DE)**

# (54) BATTERY, PREPARATION METHOD THEREFOR, AND ELECTRICAL APPARATUS COMPRISING SAME

(57) The present application provides a battery, a method for preparation thereof and an electrical device containing the same, wherein the battery includes a positive electrode plate and an electrolytic solution, the positive electrode plate including a positive electrode current collector and the positive electrode current collector including a conductive layer, and the electrolytic solution includes a first anion and a second anion, the first anion includes an anion selected from hexafluorophosphate anions, the second anion includes one ore more selected from anions shown in Formula 1 and an anion shown in Formula 2; wherein the conductive layer has a thickness of $H_1$ μm, the first anion in the electrolytic solution has a concentration of $C_1$ mol/L, and the second anion has a concentration of $C_2$ mol/L, and the battery satisfies $0.2 \times (C_2/C_1) \leq H_1 \leq (C_2/C_1) + 3$. The present application can improve the safety performance of the battery while enabling the battery to have good electrochemical performance.

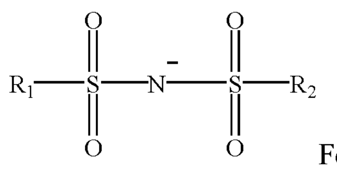

Formula 1

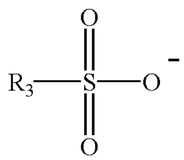

Formula 2

EP 4 507 052 A1

5

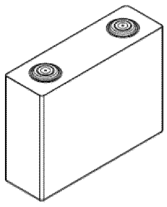

FIG. 1

## Description

### TECHNICAL FIELD

The present application belongs to the technical field of battery, in particular to a battery, a method for preparation thereof and an electrical device containing the same.

### BACKGROUND

**In** recent years, batteries have been widely used in energy storage power systems such as hydro, thermal, wind and solar power plants, as well as electric tools, electric bicycles, electric motorcycles, electric vehicles, military equipment, aerospace and many other fields. With the application and promotion of batteries, their safety has received more and more attention, and if the safety of a battery cannot be guaranteed, the batteries cannot be used. Therefore, how to enhance the safety performance of batteries without affecting the electrochemical performance of batteries is a technical problem that needs to be solved.

### SUMMARY

An object of the present application is to provide a battery, a method for preparation thereof and an electrical device containing the same, which can reduce the effect of corrosion of a positive electrode current collector on the safety performance and the electrochemical performance of the battery, thus the battery can have good electrochemical performance while improving the safety performance of the battery.

A first aspect of the present application provides a battery comprising a positive electrode plate and an electrolytic solution, wherein the positive electrode plate comprises a positive electrode current collector and a positive electrode active material layer disposed on at least one surface of the positive electrode current collector, the positive electrode current collector comprises a conductive layer, and the electrolytic solution comprises a solvent and a solute being an ionic salt formed from a cation and an anion; wherein the cation comprises one or more selected from an alkali metal cation and an alkaline earth metal cations, optionally one or more selected from lithium ions, sodium ions, and potassium ions; wherein the anion comprises a first anion and a second anion, the first anion comprises an anion selected from hexafluorophosphate anion, the second anion comprises one or more selected from anions shown in Formula 1 and anions shown in Formula 2, in which $R_1$, $R_2$ and $R_3$ each independently represent a fluorine atom or a fluorine-containing C1-C5 alkyl group, and optionally $R_1$ and $R_2$ can be bonded into a ring; wherein the conductive layer has a thickness of $H_1$ μm, the first anion in the electrolytic solution has a concentration of $C_1$ mol/L, and the second anion in the electrolytic solution has a concentration of $C_2$ mol/L, and the battery satisfies $0.2 \times (C_2/C_1) \le H_1 \le (C_2/C_1) + 3$.

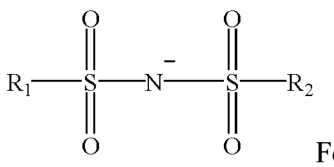

Formula 1

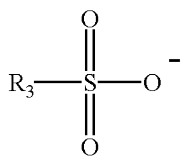

Formula 2

The inventors of the present application were surprised to find, through a large number of experiments, that by adjusting the relationship between the thickness $H_1$ μm of the conductive layer, the concentration $C_1$ mol/L of the first anion, and the concentration $C_2$ mol/L of the second anion, so that the relationship meets the requirement of $0.2\times(C_2/C_1) \le H_1 \le (C_2/C_1) + 3$, the effect of corrosion of the conductive layer on the safety and electrochemical performance of the battery can be reduced, and the safety performance of the battery can be improved while the battery can have good electrochemical performance, for example, the battery can have a longer service life.

In some embodiments of the present application, $0.2\times(C_2/C_1) \le H_1 \le (C_2/C_1) + 2$. As a result, the effect of corrosion of the conductive layer on the safety and electrochemical performance of the battery can be further reduced.

In some embodiments of the present application, $0.2 \le H_1 \le 8$, optionally, $1 \le H_1 \le 5$. As a result, the safety performance of the battery can be improved while the battery can have good electrochemical performance.

In some embodiments of the present application, $0.1 \leq C_1 \leq 1$. The first anion helps to improve the ionic conductivity of the electrolytic solution, to accelerate the ionic transport, and to improve the capacity exertion of the battery.

In some embodiments of the present application, $0.1 \leq C_2 \leq 1.5$, optionally, $0.5 \leq C_2 \leq 1.5$. The second anion can improve the ionic dissociation degree of the electrolytic solution, reduce the viscosity of the electrolytic solution, and improve the ionic conductivity of the electrolytic solution. In addition, the second anion has the characteristics of good resistance to high temperatures and not easy to be hydrolyzed, and thereby it can improve the cycling performance of the battery.

In some embodiments of the present application, $0.6 \leq C_1+C_2 \leq 2.5$, optionally, $0.6 \leq C_1+C_2 \leq 2.0$.

In some embodiments of the present application, $0.1 \leq C_2/C_1 \leq 5$, optionally, $0.5 \leq C_2/C_1 \leq 5$.

When the concentration of the first anion and the concentration of the second anion satisfy $0.6 \leq C_1+ C_2 \leq 2.5$ and/or $0.1 \leq C_2/C_1 \leq 5$, the anion can to a certain extent serve to inhibit corrosion of the conductive layer, improve the safety performance of the battery, and at the same time enable the battery to maintain excellent cycling performance.

In some embodiments of the present application, the positive electrode current collector further comprises an organic support layer, the conductive layer is provided on at least one surface of the organic support layer, and the conductive layer is further provided between the organic support layer and the positive electrode active material layer. This can further improve the safety performance of the battery and avoid the occurrence of thermal runaway problems caused by short circuit of the positive and negative electrodes.

In some embodiments of the present application, the organic support layer has a thickness of $H_2$ μm, and the battery satisfies $0.1 \leq H_1/H_2 \leq 1$, optionally, $0.2 \leq H_1/H_2 \leq 0.6$. As a result, the safety performance of the battery can be improved while the battery can have good electrochemical performance.

In some embodiments of the present application, the organic support layer has a thickness of $H_2$ μm, $1 \leq H_2 \leq 10$, optionally, $4 \leq H_2 \leq 7$. As a result, the safety performance of the battery can be improved while the battery can have high energy density.

In some embodiments of the present application, the positive electrode current collector has a total thickness of $H_0$ μm, $5 \leq H_0 \leq 15$, optionally, $9 \leq H_0 \leq 15$.

In some embodiments of the present application, the positive electrode current collector has a total thickness of $H_0$ μm, the positive electrode current collector has an elongation at break of $S_0$, and the battery satisfies $5S_0 - (H_0/10) \leq C_1/C_2 \leq 100S_0 + (H_0/9)$. When the battery further satisfies $5S_0 - (H_0/10) \leq C_1/C_2 \leq 100S_0 + (H_0/9)$, the effect of the conductive layer's corrosion on the safety and electrochemical performance of the battery can be further reduced, whereby the battery can be made to have better safety and electrochemical cycling performance.

In some embodiments of the present application, $2\% \leq S_0 \leq 3.5\%$.

In some embodiments of the present application, the organic support layer comprises one or more of a polymer material and a polymer-based composite material.

In some embodiments of the present application, the polymer material comprises one or more selected from polyolefins, polyalkynes, polyesters, polycarbonates, polyacrylates, polyamides, polyimides, polyethers, polyalcohols, polysulphones, poly(sulfurnitride), polysaccharide polymers, amino acid polymers, aromatic cyclic polymers, aromatic heterocyclic polymers, epoxy resins, phenolic resins, polyurethanes, thermoplastic elastomers, rubber, derivatives thereof, crosslinkers thereof, and copolymers thereof, optionally one or more selected from polyethylene, polypropylene, polystyrene, polyvinyl chloride, polyvinylidene fluoride, polytetrafluoroethylene, polyacetylene, polyethylene terephthalate, polybutylene terephthalate, polyethylene naphthalene, polycarbonate, polymethyl methacrylate, polycaprolactam, poly(hexamethylene adipamide), poly (p-phenylene terephthanlamide), polyoxymethylene, polyphenylene oxide, polyphenylene sulfide, polyethylene glycol, polyvinyl alcohol, poly-4-hydroxybenzoic acid, poly-2-hydroxy-6-naphthalenecarboxylic acid, polyaniline, polypyrrole, polythiophene, polyphenylene, sodium polystyrene sulfonate, cellulose, starch, silicone rubber, acrylonitrile-butadiene-styrene copolymers, derivatives thereof, crosslinkers thereof, or copolymers thereof.

In some embodiments of the present application, the polymer-based composite material comprises the polymer material and an additive comprising one or more selected from metallic materials and inorganic non-metallic materials.

In some embodiments of the present application, the conductive layer comprises one or more selected from metallic materials, optionally one or more selected from aluminum, silver, nickel, titanium, stainless steel, aluminum alloy, silver alloy, nickel alloy, and titanium alloy.

In some embodiments of the present application, $R_1$, $R_2$ and $R_3$ each independently represent a fluorine atom, trifluoromethyl, pentafluoroethyl, or heptafluoropropyl.

In some embodiments of the present application, $R_1$ and $R_2$ are the same.

In some embodiments of the present application, the electrolytic solution further comprises a third anion, and the third anion comprises one or more anions selected from tetrafluoroborate anion, difluorooxalate borate anion, bis(oxalate) borate anion, difluorophosphate anion, difluorobis(oxalate) phosphate anion and tetrafluoro(oxalate) phosphate anion. These anions contribute to the formation of a protective film with excellent performance on the surface of the positive electrode and/or the negative electrode, which can further improve at least one of the cycling performance, the rate

performance, the storage performance, and the like of the battery.

In some embodiments of the present application, the battery further comprises a negative electrode plate and a separator disposed between the positive electrode plate and the negative electrode plate.

A second aspect of the present application provides a method for preparing a battery comprising the following Step 1 and Step 2.

In Step 1, a battery is assembled from a positive electrode plate, a separator, a negative electrode plate and an electrolytic solution.

The positive electrode plate comprises a positive electrode current collector and a positive electrode active material layer disposed on at least one surface of the positive electrode current collector, and the positive electrode current collector comprises a conductive layer.

The electrolytic solution comprises a solvent and a solute, the solute being an ionic salt formed from cations and anions, wherein the cations comprise one or more selected from alkali metal cations and alkaline earth metal cations, optionally one or more selected from lithium ions, sodium ions, and potassium ions; wherein the anions comprises a first anion and a second anion, the first anion comprising an anion selected from hexafluorophosphate anion, the second anion comprising one or more selected from the anions shown in Formula 1 and the anions shown in Formula 2, in which $R_1$, $R_2$, $R_3$ each independently represent a fluorine atom or a fluorine-containing C1-C5 alkyl group, optionally $R_1$ and $R_2$ may be bonded into a ring.

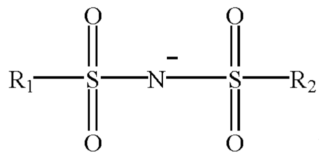
Formula 1

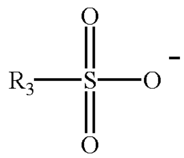
Formula 2

The thickness of the conductive layer is $H_1$ μm, the concentration of the first anion in the electrolytic solution is $C_1$ mol/L, and the concentration of the second anion in the electrolytic solution is $C_2$ mol/L.

Step 2, from the batteries obtained in step 1, a battery satisfying $0.2 \times (C_2/C_1) \leq H_1 \leq (C_2/C_1) + 3$ and optionally $0.2 \times (C_2/C_1) \leq H_1 \leq (C_2/C_1) + 2$ is selected.

**In** some embodiments of the present application, the method further comprises Step 3, selecting, from the batteries obtained in step 2, batteries that satisfy at least one of the following conditions (1) to (9):

$$(1)\ 0.2 \leq H_1 \leq 8,$$

$$(2)\ 1 \leq H_1 \leq 5,$$

$$(3)\ 0.1 \leq C_1 \leq 1,$$

$$(4)\ 0.1 \leq C_2 \leq 1.5,$$

$$(5)\ 0.5 \leq C_2 \leq 1.5,$$

$$(6)\ 0.6 \leq C_1 + C_2 \leq 2.5,$$

$$(7)\ 0.6 \leq C_1 + C_2 \leq 2.0,$$

$$(8)\ 0.1 \le C_2/C_1 \le 5,$$

$$(9)\ 0.5 \le C_2/C_1 \le 5.$$

In some embodiments of the present application, in Step 1, the positive electrode current collector further comprises an organic support layer, the conductive layer is provided on at least one surface of the organic support layer, and the conductive layer is further provided between the organic support layer and the positive electrode active material layer, wherein the organic support layer has a thickness of $H_2$ μm, the positive electrode current collector has a total thickness of $H_0$ μm, and the positive electrode current collector has an elongation at break of $S_0$.

In some embodiments of the present application, the method further comprises Step 4, selecting, from the batteries obtained from Step 2 or Step 3, batteries that satisfy at least one of the following conditions (1) to (8):

$$(1)\ 5S_0 - (H_0/10) \le C_1/C_2 \le 100S_0 + (H_0/9),$$

$$(2)\ 0.1 \le H_1/H_2 \le 1,$$

$$(3)\ 0.2 \le H_1/H_2 \le 0.6,$$

$$(4)\ 1 \le H_2 \le 10,$$

$$(5)\ 4 \le H_2 \le 7,$$

$$(6)\ 5 \le H_0 \le 15,$$

$$(7)\ 9 \le H_0 \le 15,$$

$$(8)\ 2\% \le S_0 \le 3.5\%.$$

The batteries obtained by the preparation method of the present application can have good electrochemical performance and high safety performance at the same time.

A third aspect of the present application provides an electrical device comprising a battery of the first aspect of the present application or a battery obtained by the method of the second aspect of the present application.

The inventors of the present application were surprised to find, through a large number of experiments, that by adjusting the relationship between the thickness $H_1$ μm of the conductive layer, the concentration $C_1$ mol/L of the first anion, and the concentration $C_2$ mol/L of the second anion, so that the relationship meets the requirement of $0.2\times(C_2/C_1) \le H_1 \le (C_2/C_1) + 3$, the effect of corrosion of the conductive layer on the safety and electrochemical performance of the battery can be reduced, and the safety performance of the battery can be improved while the battery can have good electrochemical performance. The electrical device of the present application comprises the battery provided in the present application and thus has at least the same advantages as the battery described herein.

## DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.

FIG. 1 is a schematic diagram of a battery cell according to an embodiment of the present application.
FIG. 2 is an exploded view of a battery cell according to the embodiment of the present application as shown in FIG. 1.

FIG. 3 is a schematic diagram of a battery module according to an embodiment of the present application.

FIG. 4 is a schematic diagram of a battery pack according to an embodiment of the present application.

FIG. 5 is an exploded view of the battery pack according to the embodiment of the present application as shown in FIG. 4.

FIG. 6 is a schematic diagram of a positive electrode plate according to an embodiment of the present application.

FIG. 7 is a schematic diagram of a positive electrode plate according to another embodiment of the present application.

FIG. 8 is a schematic diagram of an electrical device according to an embodiment of the present application using the battery of the present application as power.

The drawings are not drawn to actual scale. Reference numerals are as follows: 101 positive electrode current collector, 102 positive electrode active material layer, 1011 conductive layer, 1012 organic support layer, 1 battery pack, 2 upper box body, 3 lower box body, 4 battery module, 5 battery cell, 51 shell, 52 electrode assembly, 53 cover plate.

## DETAILED DESCRIPTION

Hereinafter, embodiments of the battery of the present application, the preparation method thereof, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean an open-ended mode, and also mean a close-ended mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of", and "more" mean two or more.

In order to improve the safety performance of the battery, in addition to improving the thermal safety performance of the material itself, the design of the electrode assembly is also optimized, such as the use of composite current collector. Composite current collector is usually an organic support layer (or insulating layer) set between two layers of conductive

layer (such as metal layer), which can improve the safety performance of the battery, to avoid thermal runaway caused by the short circuit of positive and negative electrode. However, in order to avoid sacrificing the energy density of the battery and at the same time to reduce the production cost, the existing technology usually reduces the thickness of the conductive layer.

When the electrolytic solution contains fluoro-containing sulfonimide salts or fluoro-containing sulfonates, the electrolytic solution will corrode the conductive layer (e.g., aluminum foil). When the conductive layer is thick, the electrolytic solution does not corrode enough to significantly affect the performance of the battery. However, the inventors of the present application found in the research process, when the thickness of the conductive layer is reduced, even the slight corrosive effect of the electrolytic solution causes a significant effect on the performance of the battery. At this time, the fluoro-containing sulfonimide salts or fluoro-containing sulfonates and the like contained in the electrolytic solution, will be oxidized at the positive electrode, and the oxidation product will be combined with the metal in the conductive layer (e.g., aluminum), and the combined product will be further dissolved into the electrolytic solution, which will leave a corrosion crater on the surface of the conductive layer, thus leading to the breakage of the positive electrode plate, and even seriously threatening the battery's safety performance and service life.

Battery

In view of the above problems, embodiments of the present application provide a battery comprising a positive electrode plate, a negative electrode plate, a separator and an electrolytic solution. The present application has no particular limitation on the type of the battery, for example, the battery may be a lithium-ion battery, a sodium-ion battery, etc. In particular, the battery may be a lithium-ion secondary battery.

Batteries referred to in embodiments or implementations of the present application refer to a single physical module that includes one or more battery cells to provide higher voltage and capacity. For example, a battery referred to in the present application may include a battery cell, a battery module, or a battery pack, among others. The battery cell is the smallest unit that makes up the battery and is alone capable of performing the functions of charging and discharging. The present application has no particular limitation on the shape of the battery cell, which may be cylindrical, rectangular, or any other shape. FIG. 1 is a schematic diagram of a battery cell 5 of a rectangular structure as an example.

In some embodiments, the battery cell comprises an electrode assembly, and the battery cell may further comprise an outer package. The electrode assembly may be made by a winding process and/or a stacking process from a positive electrode plate, a negative electrode plate, and a separator, etc. The outer package may be used to encapsulate the electrode assembly and the electrolytic solution. The outer package may be a hard case, such as a hard plastic case, an aluminum case, a steel case, and the like. The outer package may also be a soft package, such as a pouch-type soft package. The material of the soft bag can be plastic, such as at least one of polypropylene (PP), polybutylene terephthalate (PBT), and polybutylene succinate (PBS).

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. The electrode assembly 52 is packaged in the accommodating cavity. The number of electrode assemblies 52 contained in the battery cell 5 may be one or more, and may be adjusted according to requirements.

In some embodiments of the present application, the battery cell according to the present application may be assembled into a battery module. The battery module may include a plurality of battery cells, and the specific quantity may be adjusted according to the application and capacity of the battery module. FIG. 3 is a schematic diagram of a battery module 4 as an example. As shown in FIG. 3, in the battery module 4, a plurality of battery cells 5 may be arranged in sequence along a length of the battery module 4. Of course, the battery cells may be arranged in any other manner. Further, the plurality of battery cells 5 may be fixed by fasteners.

Optionally, the battery module 4 may further include a housing having an accommodating space, and the plurality of battery cells 5 are accommodated in the accommodating space.

In some embodiments, the foregoing battery module may alternatively be assembled into a battery pack, and the quantity of the battery module included in the battery pack may be adjusted according to the application and capacity of the battery pack. FIG. 4 and FIG. 5 are schematic diagrams of a battery pack 1 as an example. As shown in FIG. 4 and FIG. 5, the battery pack 1 may include a battery box and a plurality of battery modules 4 disposed in the battery box. The battery box includes an upper box body 2 and a lower box body 3. The upper box body 2 is used to close the lower box body 3 to form a closed space for accommodating the battery modules 4. A plurality of battery modules 4 may be arranged in the battery box in any manner.

[Electrolytic solution]

The electrolytic solution comprises a solvent and a solute being an ionic salt formed from cations and anions, wherein the cations comprise one or more selected from alkali metal cations and alkaline earth metal cations; wherein the anions comprises a first anion and a second anion, the first anion comprising an anion selected from hexafluorophosphate anion, the second anion comprising one or more selected from the anions shown in Formula 1 (fluoro-containing sulfonamide anion) and the anions shown in Formula 2 (fluoro-containing sulfonate anion), in which $R_1$, $R_2$, $R_3$ each independently represent a fluorine atom or a fluorine-containing C1-C5 alkyl group, optionally $R_1$ and $R_2$ may be bonded into a ring.

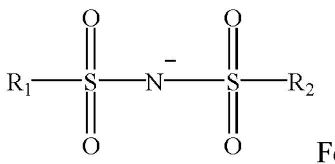

Formula 1

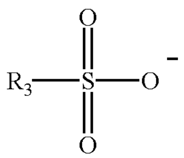

Formula 2

At present, the most widely used commercial non-aqueous electrolytic solution system is a solution of hexafluorophosphate in mixed carbonates. However, the thermal stability of hexafluorophosphate is poor at high temperatures, and it will decompose at higher temperature to generate $PF_5$, which has a strong Lewis acidity and will interact with the lone pair of electrons on the oxygen atom in the solvent molecule and cause the solvent to decompose. Furthermore, $PF_5$ has a high sensitivity to the trace amount of water in the non-aqueous electrolytic solution, and produces HF when it meets water. Fluoro-containing sulfonimide salts and fluoro-containing sulfonates have the advantages of high thermal stability and insensitivity to water, and the combination of them with hexafluorophosphate can improve the thermal stability and cycling performance of the batteries very well.

In the present application, "fluoro-containing alkyl" refers to a group in which at least one hydrogen atom in an alkyl group is substituted by a fluorine atom, which may be a partially fluorinated alkyl group or a perfluoroalkyl group.

Optionally, in some embodiments, $R_1$, $R_2$, $R_3$ each independently represent a fluorine atom, trifluoromethyl, pentafluoroethyl, heptafluoropropyl, or nonafluorobutyl.

Optionally, in some embodiments, the second anion comprises one or more selected from a bis(trifluorosulfonyl) imide anion, a bis(trifluoromethylsulfonyl)imide anion, a bis(pentafluoroethylsulfonyl)imide anion, a bis(nonafluorobutylsulfonyl)imide anion, a (trifluoromethylsulfonyl)(nonafluorobutylsulfonyl)imide anion, a (fluorosulfonyl)(trifluoromethylsulfonyl)imide anion, a perfluoropropane disulfonylimide anion, a fluorosulfonate anion, and a trifluoromethanesulfonate anion.

Optionally, in some embodiments, $R_1$ and $R_2$ are the same.

In the present application, the cation comprises one or more selected from alkali metal cations and alkaline earth metal cations. Optionally, the alkali metal cation comprises one or more selected from lithium ions, sodium ions and potassium ions. Optionally, the alkaline earth metal cation comprises magnesium ions, calcium ions, or a combination thereof.

Optionally, in some embodiments, the cation comprises one or more selected from lithium ions, sodium ions, and potassium ions, more optionally comprises lithium ions, sodium ions, or a combination thereof.

In some embodiments, the electrolytic solution further comprises a third anion, and the third anion comprises one or more selected from a tetrafluoroborate anion ($BF_4^-$), a difluorooxalate borate anion ($DFOB^-$), a bis(oxalate) borate anion ($BOB^-$), a difluorophosphate anion ($PO_2F_2^-$ ), a difluorobis(oxalate) phosphate anion ($DFOP^-$), and a tetrafluoro(oxalate) phosphate ($TFOP^-$). These anions contribute to the formation of a high-performance protective film on the surface of the positive electrode and/or the negative electrode, which can further improve at least one of the cycling performance, the rate performance, the storage performance, and the like of the battery.

The present application has no specific limitation on the type of the solvent, which can be selected according to actual needs. In some embodiments, the solvent may include one or more selected from ethylene carbonate (EC), propylene carbonate (PC), methyl ethyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl

propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), fluoroethylene carbonate (FEC), vinylene carbonate (VC), ethylene sulfate (DTD), and 1,3-propane sultone (PS).

In some embodiments, additives are optionally included in the electrolytic solution. For example, the additives may include a negative electrode film-forming additive, or a positive electrode film-forming additive, and may also include additives capable of improving certain properties of the battery, such as additives to improve the overcharge performance of the battery, additives to improve the high-temperature performance of the battery, additives to improve the low-temperature power performance of the battery, and the like.

In the present application, components and their contents in the electrolytic solution can be determined according to methods known in the art. For example, they can be determined by gas chromatography-mass spectrometry (GC-MS), ion chromatography (IC), liquid chromatography (LC), nuclear magnetic resonance spectroscopy (NMR), and inductively coupled plasma emission spectrometry (ICP-OES).

[Positive electrode plate]

The positive electrode plate comprises a positive electrode current collector and a positive electrode active material layer provided on at least one surface of the positive electrode current collector. For example, the positive electrode current collector has two surfaces opposite each other in their own thickness direction, and the positive electrode active material layer is provided on either or both of the two opposite surfaces of the positive electrode current collector.

In some embodiments, the positive electrode current collector comprises a conductive layer.

In some embodiments, the positive electrode current collector consists only of a conductive layer. Alternatively, in some embodiments, the positive electrode current collector may comprise an organic support layer in addition to a conductive layer. The conductive layer is provided on at least one surface of the organic support layer, and the conductive layer is provided further between the organic support layer and the positive electrode active material layer. For example, the organic support layer has two surfaces opposite each other in its own thickness direction, and the conductive layer is provided on either or both of said two opposite surfaces of the organic support layer to form a composite current collector. This can further improve the safety performance of the battery and avoid the occurrence of thermal runaway problems caused by short-circuit of the positive and negative electrodes.

When the positive electrode current collector consists only of a conductive layer, the thickness of the conductive layer is reduced, the cross-sectional area becomes smaller, and the resistance becomes larger, so that it can further play a role in improving the safety performance of the battery, while it can also improve the energy density of the battery. In addition, if the thickness of the conductive layer is reduced, the flexibility is better, and thus it can also reduce the risk that the positive electrode plate breaks (e.g., tapebreak during winding) that may occur in the process of preparing the battery. However, at this time, the electron conduction characteristics of the positive electrode current collector become worse, and the polarization of the battery tends to increase, which in turn is detrimental to the cycling performance and the rate performance of the battery, and at the same time, its effect on improving the safety performance of the battery is weak.

**In** some embodiments, optionally, the positive electrode current collector comprises an organic support layer and a conductive layer disposed on at least one surface of the organic support layer, and the conductive layer is disposed between the organic support layer and the positive electrode active material layer. The battery safety performance can thus be significantly improved.

In the present application, the conductive layer may be provided directly on at least one surface of the organic support layer or indirectly on at least one surface of the organic support layer, e.g. other layers may be provided between the conductive layer and the organic support layer.

In some embodiments, the conductive layer has a thickness of $H_1$ μm, in the electrolytic solution the first anion has a concentration of $C_1$ mol/L, the second anion has a concentration of $C_2$ mol/L, and the battery satisfies $0.2 \times (C_2/C_1) \leq H1 \leq (C_2/C_1) + 3$.

Compared with the first anion, the second anion (fluoro-containing sulfonimide anion and/or fluoro-containing sulfonate anion) in the electrolytic solution has the advantage of being thermally stable and insensitive to water, which can improve the ionic dissociation degree of the electrolytic solution, improve the ionic conductivity of the electrolytic solution, and thus improve the cycling performance of the battery. However, during charging, the second anion undergoes an oxidation reaction at the positive electrode, and its oxidation product combines with a metal (e.g., aluminum) in the conductive layer, and the combined product further dissolves into the electrolytic solution, thereby leading to corrosion of the conductive layer.

In particular, when only a thin conductive layer is used as the positive electrode current collector, or when a composite collector formed by a thin conductive layer and an organic support layer is used as the positive electrode current collector, because the conductive layer is thinner in the thickness direction than a conventional positive electrode current collector (e.g., with a thickness of about 12 μm-20 μm), its ability to withstand corrosion of the electrolytic solution is weaker, which results in more significant effects of positive electrode current collector corrosion on safety performance

and electrochemical performance of batteries. For example, corrosion pits may be formed on the surface of the conductive layer of the positive electrode current collector, which may lead to problems such as shortening the service life of the battery and significantly reducing the safety performance. The decomposition products (e.g., fluoro-containing lithium salts, etc.) of the first anion (or hexafluorophosphate) may be deposited on the surface of the conductive layer of the positive electrode current collector, which may inhibit the corrosion of the second anion on the conductive layer, and play the role of protecting the conductive layer, but its protective effect on the conductive layer is limited and is not sufficient to compensate for the corrosion of the conductive layer by the second anion.

Therefore, in the design of the prior art, when the electrolytic solution does not contain the second anion, the electrolytic solution's thermal stability is poor, resulting in that the battery's cycle performance is not good enough; when the electrolytic solution contains the second anion, it will corrode the conductive layer, especially having a serious impact on the thin conductive layer, for example, corrosion craters may be formed in the surface of the thin conductive layer, which will lead to shortening the service life of the battery and significant reduction in safety performance. The current batteries need to use some thin conductive layers alone as the positive electrode current collector, or use the composite collector formed by the thin conductive layer and the organic support layer, etc., in order to play the role of increasing the safety performance of the battery.

The inventors of the present application were surprised to find, through a large number of experiments, that by adjusting the relationship between the thickness $H_1$ μm of the conductive layer,, the concentration $C_1$ mol/L of the first anion, and the concentration $C_2$ mol/L of the second anion,, so that the relationship satisfies $0.2\times(C_2/C_1) \leq H_1 \leq (C_2/C_1) + 3$, the effect of corrosion of the conductive layer on the safety performance and the electrochemical performance of the battery can be reduced, and this can improve the safety performance of the battery and at the same time make the battery have good electrochemical performance, for example, the battery can have a longer service life.

In some embodiments, optionally, $0.2 \times (C_2/C_1) \leq H_1 \leq (C_2/C_1) + 2$. As a result, the effect of the conductive layer's corrosion on the safety performance and electrochemical performance of the battery can be further reduced.

The first anion helps to increase the ionic conductivity of the electrolytic solution, accelerate ionic transport and improve the capacity exertion of the battery. In some embodiments, the concentration of the first anion in the electrolytic solution is $C_1$ mol/L, optionally, $0.1 \leq C_1 \leq 1$. For example, $C_1$ may be 0.1, 0.2, 0.3, 0.4, 0.5, 0.6, 0.7, 0.8, 0.9, 1.0 or in the range consisting of any of the above values.

The second anion can increase the ionic dissociation degree of the electrolytic solution, reduce the viscosity of the electrolytic solution, and increase the ionic conductivity of the electrolytic solution. Furthermore, the second anion has the properties of good resistance to high temperatures and resistance to hydrolysis. Thus the cycling performance of the battery can be improved. In some embodiments, the concentration of the second anion in the electrolytic solution is $C_2$ mol/L, optionally, $0.1 \leq C_2 \leq 1.5$. e.g., $C_2$ may be 0.1, 0.2, 0.3, 0.4, 0.5, 0.6, 0.7, 0.8, 0.9, 1.0, 1.1, 1.2, 1.3, 1.4, 1.5, or in the range of any of these values. More optionally, $0.5 \leq C_2 \leq 1.5$.

Optionally, in some embodiments, $0.6 \leq C_1 + C_2 \leq 2.5$. e.g., $C_1 + C_2$ may be 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, or in the range of any of the above values. More optionally, $0.6 \leq C_1 + C_2 \leq 2.0$.

Optionally, in some embodiments, $0.1 \leq C_2/C_1 \leq 5$. For example, $C_2/C_1$ may be 0.1, 0.2, 0.3, 0.4, 0.5, 0.6, 0.7, 0.8, 0.9, 1.0, 1.5, 2.0, 2.5, 3.0, 3.5, 4.0, 4.5, 5.0, or in the range of any of the above values. More optionally, $0.5 \leq C_2/C_1 \leq 5$ and $1 \leq C_2/C_1 \leq 5$.

In some embodiments, optionally, the electrolytic solution satisfies both $0.6 \leq C_1 + C_2 \leq 2.5$ and $0.1 \leq C_2/C_1 \leq 5$, and more optionally, the electrolytic solution satisfies both $0.6 \leq C_1 + C_2 \leq 2.0$ and $0.5 \leq C_2/C_1 \leq 5$.

The inventors of the present application have found through a large number of experiments that when the concentration of the first anion and the concentration of the second anion satisfy $0.6 \leq C_1 + C_2 \leq 2.5$ and/or $0.1 \leq C_2/C_1 \leq 5$, it can to a certain extent serve to inhibit corrosion of the conductive layer, improve the safety performance of the battery, and at the same time enable the battery to maintain an excellent cycling performance.

In some embodiments, the conductive layer may comprise one or more selected from metallic materials, optionally one or more selected from aluminum, silver, nickel, titanium, stainless steel, aluminum alloy, silver alloy, nickel alloy, and titanium alloy, more optionally aluminum or aluminum alloy. Aluminum has good electrical conductivity and flexibility, which facilitates the conduction of electrons and processing, and fresh aluminum foil is easily oxidized in the air, which can thus form a protective film on the surface, blocking the corrosion of the aluminum by extemal moisture and air, thus making the aluminum foil or aluminum alloy foil more stable in terms of thermodynamic properties.

In some embodiments, the organic support layer may comprise one or more of a polymer material and a polymer-based composite material.

In some embodiments, the polymer material comprises one or more selected from polyolefins, polyalkynes, polyesters, polycarbonates, polyacrylates, polyamides, polyimides, polyethers, polyalcohols, polysulphones, poly(sulfurnitride), polysaccharide polymers, amino acid polymers, aromatic cyclic polymers, aromatic heterocyclic polymers, epoxy resins, phenolic resins, polyurethanes, thermoplastic elastomers, rubber, derivatives thereof, crosslinkers thereof, and copolymers thereof.

Optionally, the polymer material comprises one or more selected from polyethylene (PE), polypropylene (PP), polystyrene (PS), polyvinyl chloride (PVC), polyvinylidene fluoride (PVDF), polytetrafluoroethylene (PTFE), polyacetylene, polyethylene terephthalate (PET), polybutylene terephthalate (PBT), polyethylene naphthalene (PEN), polycarbonate (PC), polymethyl methacrylate (PMMA), polycaprolactam (PA6), poly(hexamethylene adipamide) (PA66), poly (p-phenylene terephthanlamide) (PPTA), polyoxymethylene (POM), polyphenylene oxide (PPO), polyphenylene sulfide (PPS), polyethylene glycol (PEG), polyvinyl alcohol (PVA), poly-4-hydroxybenzoic acid, poly-2-hydroxy-6-naphthalenecarboxylic acid, polyaniline (PAN), polypyrrole (PPy), polythiophene (PT), polyphenylene, sodium polystyrene sulfonate (PSS), cellulose, starch, silicone rubber, acrylonitrile-butadiene-styrene copolymers (ABS), derivatives thereof, crosslinkers thereof, or copolymers thereof.

In some embodiments, the polymer-based composite material comprises the polymer material and an additive comprising one or more selected from metallic materials and inorganic non-metallic materials. The present application has no specific limitations on the types of metallic and inorganic non-metallic materials, which may be selected according to actual needs.

Optionally, in some embodiments, the thickness $H_1$ μm of the conductive layer satisfies $0.2 \le H_1 \le 8$. For example, $H_1$ may be 0.2, 0.5, 1, 1.5, 2, 2.5, 3, 3.5, 4, 4.5, 5, 5.5, 6, 6.5, 7, 7.5, 8, or in the range of any of the above values. More optionally, $1 \le H_1 \le 5$. It is thereby possible to improve the safety performance of the battery while at the same time allowing the battery to have good electrochemical performance, e.g. the battery may have a longer service life. In addition, the following can be effectively avoided: when the conductive layer is too thin, on the one hand, it is unfavorable for production and preparation, and on the other hand, there is a risk of being pressed and broken during cold pressing; when the conductive layer is too thick, the safety performance of the battery may not be effectively improved.

The positive electrode current collector may consist of only a conductive layer. Alternatively, the positive electrode current collector may comprise an organic support layer in addition to a conductive layer, and the conductive layer is provided on at least one surface of the organic support layer. In some embodiments, the conductive layer is provided on one surface of the organic support layer. In some embodiments, the conductive layer is provided on both surfaces of the organic support layer. It should be noted that the thickness parameter of the conductive layer is a thickness parameter of the conductive layer disposed on a single side of the organic support layer, or, when the positive electrode current collector consists of only the conductive layer, the thickness parameter of the conductive layer is the thickness parameter of the positive electrode current collector. When the conductive layer is provided on both sides of the organic support layer, the thickness of the conductive layer on both sides may be the same or different; the material of the conductive layer on both sides may be the same or different. In addition, when the conductive layer is provided on both sides of the organic support layer, the conductive layer parameters (e.g., thickness, material, etc.) of any one of the sides satisfy the present application, which is considered to fall within the protection scope of the present application.

In some embodiments, optionally, the thickness $H_1$ μm of the conductive layer and the thickness $H_2$ μm of the organic support layer satisfy $0.1 \le H_1/H_2 \le 1$. For example, $H_1/H_2$ may be 0.1, 0.2, 0.3, 0.4, 0.5, 0.6, 0.7, 0.8, 0.9, 1.0, or in the range of any of the above values. More optionally, $0.1 \le H_1/H_2 \le 0.8$, $0.2 \le H_1/H_2 \le 0.6$. Thus it is possible to improve the safety performance of the battery while at the same time allowing the battery to have good electrochemical performance, e.g., the battery can have a longer service life. In addition the following situations can be effectively avoided: when $H_1/H_2$ is too small, there is a risk that the composite current collector is pressed and broken during the cold pressing process; when $H_1/H_2$ is too large, the safety performance of the battery may not be effectively improved.

In some embodiments, optionally, the thickness $H_2$ μm of the organic support layer satisfies $1 \le H_2 \le 10$. e.g., $H_2$ may be 1, 1.5, 2, 2.5, 3, 3.5, 4, 4.5, 5, 5.5, 6, 6.5, 7, 7.5, 8, 8.5, 9, 9.5, 10, or in the range of any of these values. Optionally, $4 \le H_2 \le 7$. This allows the battery to have a high energy density while improving the safety performance of the battery.

Optionally, in some embodiments, the positive electrode current collector has a total thickness of $H_0$ μm satisfying $5 \le H_0 \le 15$. e.g., $H_0$ may be 5, 5.5, 6, 6.5, 7, 7.5, 8, 8.5, 9, 9.5, 10, 10.5, 11, 11.5, 12, 12.5, 13, 13.5, 14, 14.5, 15 or in the range of any of the above values. More optionally, $9 \le H_0 \le 15$. In the present application, the total thickness of the positive electrode current collector is the sum of the thickness of the organic support layer and the conductive layer disposed on both sides of the organic support layer.

The inventors of the present application further found in the course of their research that the elongation at break $S_0$ of the positive electrode current collector is correlated with the total thickness $H_0$ μm of the positive electrode current collector, the concentration $C_1$ mol/L of the first anion, and the concentration $C_2$ mol/L of the second anion, and that the larger $C_1/C_2$ is and the larger $H_0$ is, the larger the elongation at break $S_0$ of the positive electrode current collector is.

The elongation at break of the positive electrode current collector is the rate of change of its stretched length at break. By comparing the normal positive electrode current collector and the corroded positive electrode current collector, it can be seen that when the tensile force is comparable, the corroded positive electrode current collector breaks when the stretched length is small due to its own defects, so the elongation at break is smaller. The elongation at break of the positive electrode current collector is not only related to whether it is corroded or not, but also related to its own thickness, and the thicker the positive electrode current collector is, the larger its elongation at break is. When the elongation at break of the positive electrode current collector in the battery is smaller, it indicates that under the same force, the positive electrode

plate is more likely to break, and after the break of the positive electrode plate, the positive electrode active material on the positive electrode plate can no longer be used, which leads to a significant reduction in the capacity of the battery, and the cycling performance has a significant decline. In addition, the broken positive electrode plate is electrically conductive, and when it contacts with the negative electrode plate, it will cause short-circuit in the battery, posing a safety hazard and affecting the safety performance of the battery.

The inventor of the present application further surprisingly discovered in the course of the research that when the battery further satisfies $5S_0 - (H_0/10) \le C_1/C_2 \le 100S_0 + (H_0/9)$, the influence of the conductive layer's corrosion on the safety performance and electrochemical performance of the battery can be further reduced, thereby enabling the battery to have better safety performance and electrochemical cycling performance.

In some embodiments, optionally, the elongation at break $S_0$ of the positive electrode current collector satisfies $2\% \le S_0 \le 3.5\%$. For example, $S_0$ may be 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, or in the range of any of the above values.

In some embodiments, the positive electrode active material layer comprises a positive electrode active material.

When the battery of the present application is a lithium-ion battery, the positive electrode active material may include, but is not limited to, one or more of a lithium-containing transition metal oxide, a lithium-containing phosphate, and respective modified compounds thereof. Examples of the lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt alumina oxide, and respective modified compounds thereof. Examples of the lithium-containing phosphates may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, in order to further increase the energy density of the battery, the positive electrode active material for the lithium-ion battery may include one or more of a lithium transition metal oxide having a general formula $LiNi_xCo_yM_zO_{2-p}A_p$, $LiMn_2O_4$, $aLi_2MnO_3\cdot(1-a)LiQO_2$, and respective modified compounds thereof. In the general formula $LiNi_xCo_yM_zO_{2-p}A_p$, M comprises one or more selected from Mn, Al, Mg, Cu, Zn, Zr, Fe, Sn, B, Ga, Cr, Sr, V, and Ti, and A comprises one or more selected from N, F, S, and Cl, and $0 \le x \le 1$, $0 \le y \le 1$, $0 \le z \le 1$, $x + y + z = 1$, $0 \le p \le 1$. In the general formula $aLi_2MnO_3\cdot(1-a)LiQO_2$, Q comprises one or more selected from Ni, Co, Mn, Fe, Ti, Cr, and Zr, $0 < a < 1$.

As an example, the positive electrode active material for a lithium-ion battery may include one or more of LiCoOz, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiMn_2O_4$, $aLi_2MnO_3\cdot(1-a)LiMnO_2$, $LiFePO_4$ and $LiMnPO_4$.

When the battery of the present application is a sodium-ion battery, the positive electrode active material may include, but is not limited to, one or more of a sodium-containing transition metal oxide, a polyanionic material (e.g., phosphate, fluorophosphate, pyrophosphate, sulfate, etc.), and a Prussian blue material.

As examples, the positive electrode active material for the sodium-ion battery may include one or more of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, a Prussian blue material, a material having a general formula $X_pM'_q(PO_4)_rO_xY_{3-x}$. In the general formula $X_pM'_q(PO_4)_rO_xY_{3-x}$, $0 < p \le 4$, $0 \le q \le 2$, $1 \le r \le 3$, and $0 \le x \le 2$, X comprises one or more of selected from $H^+$, $Li^+$, $Na^+$, $K^+$, and $NH_4^+$, and M' is a transition metal cation, optionally a transition metal cation comprising one or more selected from V, Ti, Mn, Fe, Co, Ni, Cu and Zn, and Y is a halogen anion, optionally one or more selected from F, Cl and Br.

In the present application, the respective modified compounds of the above positive electrode active materials may be a doping modification and/or a surface coating modification of the positive electrode active material.

In some embodiments, the positive electrode active material layer may further comprise a conductive agent for positive electrode. The present application does not specifically limit the type of the conductive agent for positive electrode, and as examples, the conductive agent for positive electrode comprises one or more of superconducting carbon, conductive graphite, acetylene black, carbon black, Ketjen black, carbon dots, carbon nanotubes, graphene, and carbon nanofibers.

In some embodiments, the positive active material layer may further comprise a binder for positive electrode. The present application does not specifically limit the type of the binder for positive electrode, and as an example, the binder for positive electrode may include one or more of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoro-containing acrylate-based resin.

The positive electrode active material layer is usually formed by applying a positive electrode slurry to a positive electrode current collector, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

The positive electrode plate of the present application is described below in conjunction with the accompanying drawings.

FIG. 6 is a schematic diagram of an embodiment of the positive electrode plate 10 of the present application. As shown in FIG. 6, the positive electrode plate 10 comprises a positive electrode current collector 101 and a positive electrode active material layer 102 disposed on two surfaces of the positive electrode current collector 101, the positive electrode current collector 101 comprises an organic support layer 1012 and a conductive layer 1011 disposed on the two surfaces of the organic support layer, and the conductive layer 1011 is disposed between the organic support layer 1012 and the positive electrode active material layer 102.

FIG. 7 is a schematic diagram of another embodiment of the positive electrode plate 10 of the present application. As shown in FIG. 7, the positive electrode plate 10 comprises a positive electrode current collector 101 and a positive electrode active material layer 102 disposed on one of the surfaces of the positive electrode current collector 101, and the positive electrode current collector 101 comprises an organic support layer 1012 and a conductive layer 1011 disposed on one of the surfaces of the organic support layer, the electrically conductive layer 1011 being disposed between the organic support layer 1012 and the positive electrode active material layer 102.

[Negative electrode plate]

In some embodiments, the negative electrode plate comprises a negative electrode current collector and a negative electrode active material layer provided on at least one surface of the negative electrode current collector and comprising a negative electrode active material. For example, the negative electrode current collector has two surfaces opposite to each other in the direction of its own thickness, and the negative electrode active material layer is provided on either or both of two opposite surfaces of the negative electrode current collector.

In some embodiments, the negative electrode active material layer comprises a negative electrode active material. The negative electrode active material may be a negative electrode active material known in the art for use in batteries. By way of example, the negative electrode active material includes, but is not limited to, one or more of natural graphite, artificial graphite, soft carbon, hard carbon, silicon-based material, tin-based material, lithium titanate, and lithium aluminum alloy. The silicon-based material may include at least one of elemental silicon, a silicon oxide, a silicon carbon composite, a silicon nitrogen composite, or a silicon alloy material. The tin-based materials may include at least one of elemental tin, a tin oxide (e.g., SnO, $SnO_2$), and a tin alloy material (e.g., Li-Sn alloys, Li-Sn-O alloys).

In some embodiments, the negative electrode active material layer may optionally comprise a conductive agent for negative electrode. In the present application, the type of the conductive agent fornegative electrode is not particularly limited and, as an example, the conductive agent fornegative electrode may include at least one of superconducting carbon, conductive graphite, acetylene black, carbon black, Ketjen black, carbon dots, carbon nanotubes, graphene, and carbon nanofibers.

In some embodiments, the negative electrode active material layer may further optionally comprise a binder fornegative electrode. In the present application, the type of the binder for negative electrode is not particularly limited and, as an example, the binder for negative electrode may include one or more of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, the negative electrode active material layer may optionally include other additives. As an example, the other additives may include thickeners, e.g., sodium carboxymethyl cellulose (CMC), and PTC thermistor material, etc.

In some embodiments, the negative electrode current collector may be a metal foil or a composite current collector. As an example of a metal foil, a copper foil may be used. The composite current collector may include a polymer material base layer and a metallic material layer formed on at least one surface of the polymer material base layer. As an example, the metallic material may be selected from at least one of copper, copper alloy, nickel, nickel alloy, titanium, titanium alloy, silver, and silver alloy. As an example, the polymer material base layer may comprise one or more of polypropylene (PP), polyethylene terephthalate (PET), polybutylene terephthalate (PBT), polystyrene (PS), and polyethylene (PE).

The negative electrode active material layer is usually made by applying a negative electrode slurry to the negative electrode current collector followed by drying and cold pressing. The negative electrode slurry is usually formed by dispersing the negative electrode active material, an optional conductive agent, an optional binder, and any other optional additives in a solvent and stirring uniformly. The solvent may be N-methylpyrrolidone (NMP) or deionized water, but is not limited thereto.

The negative electrode plate does not exclude other additional functional layers than the negative electrode active material layer. For example, in some embodiments, the negative electrode plate described in the present application further comprises a conductive primer (e.g. being composed of a conductive agent and a binder) sandwiched between the

negative electrode current collector and the negative electrode active material layer and disposed on the surface of the negative electrode current collector. In some embodiments, the negative electrode plate described in this application further comprises a protective layer covering the surface of the negative electrode active material layer.

[Separator]

The separator is disposed between the positive electrode plate and the negative electrode plate, which mainly functions as preventing short circuit of the positive and negative electrodes and at the same time allowing active ions to pass through. There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

Preparation method

The embodiments of the present application further provide a method for preparing a battery comprising the following Step 1 and Step 2.

In Step 1, a battery is assembled from a positive electrode plate, a separator, a negative electrode plate and an electrolytic solution.

The positive electrode plate comprises a positive electrode current collector and a positive electrode active material layer disposed on at least one surface of the positive electrode current collector, and the positive electrode current collector comprises a conductive layer.

The electrolytic solution comprises a solvent as well as a solute, the solute being an ionic salt formed from cations and anions, wherein the cations comprise one or more selected from alkali metal cations and alkaline earth metal cations, optionally one or more selected from lithium ions, sodium ions, and potassium ions; wherein the anions comprises a first anion and a second anion, the first anion comprising an anion selected from hexafluorophosphate anion, the second anion comprising one or more anions selected from the anions shown in Formula 1 and the anions shown in Formula 2, in which $R_1$, $R_2$, $R_3$ each independently represent a fluorine atom or a fluorine-containing C1-C5 alkyl group, optionally $R_1$ and $R_2$ may be bonded into a ring.

The thickness of the conductive layer is $H_1$ μm, the concentration of the first anion in the electrolytic solution is $C_1$ mol/L, and the concentration of the second anion in the electrolytic solution is $C_2$ mol/L.

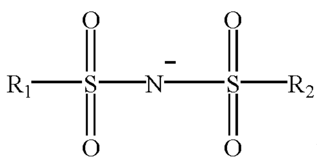

Formula 1

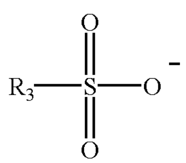

Formula 2

At Step 2, from the batteries obtained in step 1, a battery satisfying $0.2 \times (C_2/C_1) \le H_1 \le (C_2/C_1) + 3$ and optionally $0.2 \times (C_2/C_1) \le H_1 \le (C_2/C_1) + 2$ is selected.

In some embodiments of the present application, in Step 1, the positive electrode current collector further comprises an organic support layer, the conductive layer is provided on at least one surface of the organic support layer, and the conductive layer is further provided between the organic support layer and the positive electrode active material layer, wherein the organic support layer has a thickness of $H_2$ μm, the positive electrode current collector has a total thickness of $H_0$ μm, and the positive electrode current collector has an elongation at break of $S_0$.

In some embodiments of the present application, the method further comprises Step 3, i.e. selecting, from the batteries obtained in step 2, batteries that satisfy at least one of the following conditions (1) to (9) :

$$(1)\ 0.2 \le H_1 \le 8,$$

$$(2)\ 1 \leq H_1 \leq 5,$$

$$(3)\ 0.1 \leq C_1 \leq 1,$$

$$(4)\ 0.1 \leq C_2 \leq 1.5,$$

$$(5)\ 0.5 \leq C_2 \leq 1.5,$$

$$(6)\ 0.6 \leq C_1 + C_2 \leq 2.5,$$

$$(7)\ 0.6 \leq C_1 + C_2 \leq 2.0,$$

$$(8)\ 0.1 \leq C_2/C_1 \leq 5,$$

$$(9)\ 0.5 \leq C_2/C_1 \leq 5.$$

In some embodiments of the present application, the method further comprises Step 4, i.e. selecting, from the batteries obtained from Step 2 or Step 3, batteries that satisfy at least one of the following conditions (1) to (8) :

$$(1)\ 5S_0 - (H_0/10) \leq C_1/C_2 \leq 100S_0 + (H_0/9),$$

$$(2)\ 0.1 \leq H_1/H_2 \leq 1,$$

$$(3)\ 0.2 \leq H_1/H_2 \leq 0.6,$$

$$(4)\ 1 \leq H_2 \leq 10,$$

$$(5)\ 4 \leq H_2 \leq 7,$$

$$(6)\ 5 \leq H_0 \leq 15,$$

$$(7)\ 9 \leq H_0 \leq 15,$$

$$(8)\ 2\% \leq S_0 \leq 3.5\%.$$

The batteries obtained by the preparation method of the present application can have good electrochemical performance and high safety performance at the same time.

In some embodiments, in Step 1, the method for preparing the battery is well known. As an example, the positive electrode plate, the separator, and the negative electrode plate are stacked and/or wound to obtain an electrode assembly; the electrode assembly is put into an outer package and dried, into which the electrolytic solution is then added, and the battery cell is obtained after vacuum encapsulation, standing, formation, aging and other processes. A plurality of battery

cells may further be connected in series or in parallel or in hybrid to form a battery module. A plurality of battery modules may further be connected in series or in parallel or in hybrid to form a battery pack. In some embodiments, a plurality of battery cells may also directly form a battery pack.

## Electrical device

The embodiments of the present application further provide an electrical device comprising the battery of the present application. The battery can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select the type of batteries according to its usage requirements, such as a battery cell, a battery module or a battery pack.

FIG. 8 is a schematic diagrams of an electrical device as an example. The electrical device is a pure electric vehicle, a hybrid electric vehicle, or a plug-in hybrid electric vehicle. In order to meet the requirements for high power and high energy density of the electrical device, a battery pack or a battery module can be used.

As another example, the electrical device may be a mobile phone, a tablet computer, a notebook computer, and the like. The electric device is generally required to be light and thin, and a battery cell can be used as a power source.

## Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

The batteries of Examples 1-17 and Comparative Examples 1-3 were prepared as follows.

### Preparation of electrolytic solution

In a glove box filled with argon gas (water content <10 ppm, oxygen content <1 ppm), ethylene carbonate (EC) and ethyl methyl carbonate (EMC) were mixed at a mass ratio of 30:70 to obtain an organic solvent, and then 2 wt% of vinylene carbonate (VC) was added to the organic solvent, and then lithium salts that were sufficiently dried were added to the organic solvent to prepare the electrolytic solution. The types of lithium salts and their concentrations were shown in Table 1.

### Preparation of positive electrode plate

Aluminum foil was placed in a mechanical roller and rolled into a conductive layer with a predetermined thickness by applying a pressure of20-40 tons; then a mixed solution of polyvinylidene fluoride (PVDF) and NMP was applied on the surface of polyethylene terephthalate (PET) as an organic support layer that had undergone a surface cleaning process; finally, the conductive layer with the above predetermined thickness was bound to the two surfaces of the organic support layer and dried to make it tightly be bonded to obtain a positive electrode current collector. The specific thickness parameters of the conductive layer and the organic support layer were shown in Table 2.

A positive electrode active material $LiNi_{0.5}Co_{0.2}Mn_{0.3}O_2$ (NCM523), a conductive agent carbon black (Super P), and a binder polyvinylidene fluoride (PVDF) were fully stirred and mixed in the appropriate amount of solvent NMP at a mass ratio of 80:10:10 to form a positive electrode slurry with a solid content of 50wt%; the positive electrode slurry was uniformly applied on the surface of the positive electrode current collector prepared as described above, and then dried to make it tightly be bonded; after drying and cold pressing, the positive electrode plate was obtained.

### Preparation of negative electrode plate

Graphite, carbon black (Super P), sodium carboxymethyl cellulose (CMC), a thickener and styrene-butadiene rubber (SBR), a negative electrode active material, a conductive agent, and a binder were fully stirred and mixed in an appropriate amount of deionized water as a solvent at a mass ratio of 80:15:3:2 to form a negative electrode slurry with a solid content of 30wt%; the negative electrode slurry was uniformly applied on the surface of copper foil as negative

electrode current collector, and then after drying and cold pressing, the negative electrode plate was obtained.

Preparation of separator

A porous polyethylene film with a thickness of 16 μm was used as the separator.

Preparation of battery

The positive electrode plate, the separator, and the negative electrode plate were stacked in sequence and wound to obtain an electrode assembly; the electrode assembly was put into an outer package and dried, into which the electrolytic solution was then added, and a soft-packing battery was obtained after vacuum encapsulation, standing, formation, shaping and other processes.

Table 1

| No. | First lithium salt | | Second lithium salt | | $C_1+C_2$ (mol/L) | $C_2/C_1$ |
|---|---|---|---|---|---|---|
| | Type | Concentration $C_1$ (mol/L) | Type | Concentration $C_2$ (mol/L) | | |
| Comparative Example 1 | $LiPF_6$ | 0.1 | LiFSI | 0.5 | 0.6 | 5.00 |
| Comparative Example 2 | $LiPF_6$ | 0.5 | LiFSI | 0.5 | 1 | 1.00 |
| Comparative Example 3 | $LiPF_6$ | 0.1 | LiFSI | 0.5 | 0.6 | 5.00 |
| Example 1 | $LiPF_6$ | 0.1 | LiFSI | 0.5 | 0.6 | 5.00 |
| Example 2 | $LiPF_6$ | 0.2 | LiFSI | 0.5 | 0.7 | 2.50 |
| Example 3 | $LiPF_6$ | 0.5 | LiFSI | 0.5 | 1 | 1.00 |
| Example 4 | $LiPF_6$ | 0.8 | LiFSI | 0.5 | 1.3 | 0.63 |
| Example 5 | $LiPF_6$ | 1 | LiFSI | 0.5 | 1.5 | 0.50 |
| Example 6 | $LiPF_6$ | 0.5 | LiFSI | 0.5 | 1 | 1.00 |
| Example 7 | $LiPF_6$ | 0.5 | LiFSI | 0.5 | 1 | 1.00 |
| Example 8 | $LiPF_6$ | 0.5 | LiFSI | 0.5 | 1 | 1.00 |
| Example 9 | $LiPF_6$ | 0.5 | LiFSI | 0.5 | 1 | 1.00 |
| Example 10 | $LiPF_6$ | 1 | LiFSI | 1.5 | 2.5 | 1.50 |
| Example 11 | $LiPF_6$ | 0.1 | LiTFSI | 0.5 | 0.6 | 5.00 |
| Example 12 | $LiPF_6$ | 0.5 | LiTFSI | 0.1 | 0.6 | 0.20 |
| Example 13 | $LiPF_6$ | 0.3 | LiFSI | 1.2 | 1.5 | 4.00 |
| Example 14 | $LiPF_6$ | 0.3 | LiTFSI | 1.2 | 1.5 | 4.00 |
| Example 15 | $LiPF_6$ | 0.3 | LiFSI | 1.2 | 1.5 | 4.00 |
| Example 16 | $LiPF_6$ | 0.3 | Lithium fluorosulfonate | 0.3 | 0.6 | 1.00 |
| Example 17 | $LiPF_6$ | 0.3 | Lithium trifluoromethane-sulfonate | 0.3 | 0.6 | 1.00 |

Table 2

| No. | Positive electrode current collector | | | | |
|---|---|---|---|---|---|
| | Thickness of conductive layer $H_1$(μm) | Thickness of organic support layer $H_2$(μm) | Total thickness $H_0$ (μm) | Elongation at break $S_0$ | $H_1/H_2$ |
| Comparative Example 1 | 0.5 | 5 | 6 | 2.00% | 0.1 |
| Comparative Example 2 | 5 | 5 | 15 | 3.50% | 1.0 |
| Comparative Example 3 | 12 | / | 12 | / | / |
| Example 1 | 2 | 5 | 9 | 2.30% | 0.4 |
| Example 2 | 2 | 5 | 9 | 2.50% | 0.4 |
| Example 3 | 2 | 5 | 9 | 2.80% | 0.4 |
| Example 4 | 2 | 5 | 9 | 2.90% | 0.4 |
| Example 5 | 2 | 5 | 9 | 3.00% | 0.4 |
| Example 6 | 0.5 | 5 | 6 | 2.60% | 0.1 |
| Example 7 | 1 | 5 | 7 | 2.70% | 0.2 |
| Example 8 | 2.5 | 5 | 10 | 2.80% | 0.5 |
| Example 9 | 4 | 5 | 13 | 3.00% | 0.8 |
| Example 10 | 2 | 5 | 9 | 2.70% | 0.4 |
| Example 11 | 1 | 5 | 7 | 2.20% | 0.2 |
| Example 12 | 1 | 5 | 7 | 3.50% | 0.2 |
| Example 13 | 5 | 5 | 15 | 3.10% | 1.0 |
| Example 14 | 3 | 5 | 11 | 2.90% | 0.6 |
| Example 15 | 3 | 5 | 11 | 2.80% | 0.6 |
| Example 16 | 3 | 5 | 11 | 3.00% | 0.6 |
| Example 17 | 3 | 5 | 11 | 3.10% | 0.6 |

**Test section**

(1) Nail penetration Test

At 25°C, the battery was charged with 1C constant current to 4.2V, and then charged with 4.2V constant voltage until the current was less than or equal to 0.05C, and then a high-temperature-resistant steel needle with a diameter of φ3mm was used to pin prick the center of the large surface of the battery at the speed of 0. 1mm/s until the battery was out of control, and the state of the battery when it was thermal runaway was recorded.

(2) Cycling performance test

At 25°C, the battery was charged with 1C constant current to 4.2V, and then charged with 4.2V constant voltage until the current was less than or equal to 0.05C, at this time, the battery was fully charged, and the charging capacity at this time was recorded, i.e., the charging capacity at the 1$^{st}$ cycle; after the above battery was standing for 5mins, discharged to 2.8V with 1C constant current, which was a cyclic charging and discharging process, and the discharging capacity at this time was recorded, i.e., the discharging capacity at the 1$^{st}$ cycle. The cyclic charging/discharging test of the battery was carried out according to the above method, and the discharging capacity for each cycle was recorded. The capacity retention rate (%) of the battery after 500 cycles at 25°C= discharging capacity at the 500$^{th}$ cycle /discharging capacity at the 1$^{st}$ cycle × 100%. For accuracy, the average value of 5 parallel samples was taken as the test result.

Table 3

| No | Whether satisfying $0.2\times(C_2/C_1)\leq H_1\leq(C_2/C_1)+3$ | Whether satisfying $0.2\times(C_2/C_1)+0.2\leq H_1\leq(C_2/C_1)+2$ | Whether satisfying $5S_0-(H_0/10)\leq-C_1/C_2\leq100S_0+(H_0/9)$ | Result of nail Penetratio n Test | Capacit y retentio n rate (%) after 500 cycles |
|---|---|---|---|---|---|
| Comparativ e Example 1 | No | No | Yes | Fire | 78.30% |
| Comparativ e Example 2 | No | No | Yes | Fire | 82.20% |
| Comparativ e Example 3 | / | / | / | Fire and explosion | 72.10% |
| Example 1 | Yes | Yes | Yes | Not smoke | 97.30% |
| Example 2 | Yes | Yes | Yes | Not smoke | 97.60% |
| Example 3 | Yes | Yes | Yes | Not smoke | 98.00% |
| Example 4 | Yes | Yes | Yes | Not smoke | 98.80% |
| Example 5 | Yes | Yes | Yes | Not smoke | 99.00% |
| Example 6 | Yes | Yes | Yes | Slightly smoking | 97.50% |
| Example 7 | Yes | Yes | Yes | Not smoke | 97.70% |
| Example 8 | Yes | Yes | Yes | Not smoke | 98.10% |
| Example 9 | Yes | No | Yes | Slightly smoking | 97.30% |
| Example 10 | Yes | Yes | Yes | Not smoke | 95.70% |
| Example 11 | Yes | No | Yes | Not smoke | 95.30% |
| Example 12 | Yes | Yes | No | Severe smoking | 93.20% |
| Example 13 | Yes | Yes | Yes | Not smoke | 97.40% |
| Example 14 | Yes | Yes | Yes | Not smoke | 96.20% |
| Example 15 | Yes | Yes | Yes | Not smoke | 96.50% |
| Example 16 | Yes | Yes | Yes | Not smoke | 97.30% |
| Example 17 | Yes | Yes | Yes | Not smoke | 97.00% |

From the test results in Table 3, it can be seen that by adjusting the relationship between the thickness $H_1$ $\mu$m of the conductive layer, the concentration $C_1$ mol/L of the first anion, and the concentration $C_2$ mol/L of the second anion, so that it satisfied $0.2\times(C_2/C_1) \leq H_1 \leq (C_2/C_1) + 3$, and optionally $0.2\times(C_2/C_1) \leq H_1 \leq (C_2/C_1) + 2$, the safety performance and cycling performance of the battery were significantly improved. At this time the probability of the battery catching fire was significantly reduced, and at the same time, the unfavorable effect on the cycling performance of the battery due to increased corrosion caused by the reduction in the thickness of the conductive layer can also be significantly reduced.

Comparing the test results of Example 1, Example 11 and Comparative Example 1, it can be seen that when the composition of the electrolytic solution was the same, due to the thinner conductive layer of Comparative Example 1, at this time, even if the conductive layer was slightly corroded by the electrolytic solution, the safety performance and cycling performance of the battery will be significantly affected.

As can be seen from the test results of Examples 3, 6-9 and Comparative Example 2, when the composition of the electrolytic solution was the same, due to the thicker conductive layer of the Comparative Example 2, resulting in not satisfying $0.2 \times (C_2/C_1) \leq H_1 \leq (C_2/C_1) + 2$, at this time, the positive electrode current collector was more electrically conductive, and even if an organic support layer was used, it is not able to effectively prevent the positive electrode and the negative electrode from being short-circuited, which leads to poor safety performance of the battery; in addition, due to the thicker conductive layer of Comparative Example 2, which is also not conducive to the heat dissipation in the cycling

process, at this time, there were more side reactions inside the battery, and then the battery's cycling performance will be poorer

Comparative Example 3 used ordinary 12 μm thick aluminum foil as the positive electrode current collector, which had lower resistance and good electrical conductivity, and thus the positive electrode and negative electrode were prone to short-circuit during the pin penetration test, which in turn leads to poorer safety performance of the battery; at the same time, compared with the composite current collector formed by the conductive layer and the organic support layer, the thermal insulation of the positive electrode current collector with pure aluminum foil was worse, and thus the dynamics performance on the positive electrode side of the battery was worse, thus the resistance of the positive electrode to intercalate/deintercalate lithium during charging and discharging was larger, which was prone to trigger more side reactions, and thus the cycling performance of the battery was worse.

It can further be seen from the test results of Examples 1-17 that when the battery further satisfied $5S_0 - (H_0/10) \leq C_1/C_2 \leq 100S_0 + (H_0/9)$, it was conducive to further improving the safety performance and cycling performance of the battery.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the gist of the present application and other embodiments constructed by combining some constituent elements in the embodiments are also included in the scope of the present application.

## Claims

1. A battery comprising

   a positive electrode plate comprising a positive electrode current collector and a positive electrode active material layer disposed on at least one surface of the positive electrode current collector, the positive electrode current collector comprising a conductive layer;
   an electrolytic solution comprising a solvent and a solute being an ionic salt formed from a cation and an anion, wherein the cation comprises a cation selected from the group consisting of an alkali metal cation and an alkaline earth metal cations optionally comprises one or more selected from lithium ions, sodium ions, and potassium ions;
   the anion comprises a first anion and a second anion, the first anion comprises an anion selected from hexafluorophosphate anions, the second anion comprises one or more selected from anions shown in Formula 1 and an anion shown in Formula 2, in which $R_1$, $R_2$ and $R_3$ each independently represent a fluorine atom or a fluorine-containing C1-C5 alkyl group, and optionally $R_1$ and $R_2$ can be bonded into a ring,

   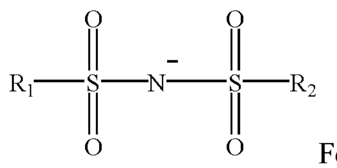
   Formula 1

   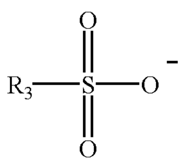
   Formula 2

   wherein the conductive layer has a thickness of $H_1$ μm, the first anion in the electrolytic solution has a concentration of $C_1$ mol/L, the second anion in the electrolytic solution has a concentration of $C_2$ mol/L, and the battery satisfies $0.2 \times (C_2/C_1) \leq H_1 \leq (C_2/C_1) + 3$.

2. The battery according to claim 1, wherein the battery satisfies $0.2\times(C_2/C_1) \leq H_1 \leq (C_2/C_1) + 2$.

3. The battery according claim 1 or 2, wherein

   $0.2 \leq H_1 \leq 8$, optionally, $1 \leq H_1 \leq 5$; and/or

$0.1 \le C_1 \le 1$; and/or
$0.1 \le C_2 \le 1.5$, optionally, $0.5 \le C_2 \le 1.5$.

**4.** The battery according to any of claims 1-3, wherein
$0.6 \le C_1 + C_2 \le 2.5$, optionally, $0.6 \le C_1 + C_2 \le 2.0$; and/or
$0.1 \le C_2/C_1 \le 5$, optionally, $0.5 \le C_2/C_1 \le 5$.

**5.** The battery according to any one of claims 1-4, wherein the positive electrode current collector further comprises an organic support layer, the conductive layer is provided on at least one surface of the organic support layer, and the conductive layer is further provided between the organic support layer and the positive electrode active material layer.

**6.** The battery according to claim 5, wherein the organic support layer has a thickness of $H_2$ μm, and the battery satisfies $0.1 \le H_1/H_2 \le 1$, optionally, $0.2 \le H_1/H_2 \le 0.6$.

**7.** The battery according to claim 5 or 6, wherein the organic support layer has a thickness of $H_2$ μm, $1 \le H_2 \le 10$, optionally, $4 \le H_2 \le 7$.

**8.** The battery according to any one of claims 5-7, wherein the positive electrode current collector has a total thickness of $H_0$ μm, $5 \le H_0 \le 15$, optionally, $9 \le H_0 \le 15$.

**9.** The battery according to any one of claims 5-8, wherein the positive electrode current collector has a total thickness of $H_0$ μm, the positive electrode current collector has an elongation at break of $S_0$, and the battery satisfies $5S_0 - (H_0/10) \le C_1/C_2 \le 100S_0 + (H_0/9)$.

**10.** The battery according to claim 9, wherein $2\% \le S_0 \le 3.5\%$.

**11.** The battery according to any one of claims 5-10, wherein the organic support layer comprises one or more of a polymer material and a polymer-based composite material;

wherein the polymer material comprises one or more selected from polyolefins, polyalkynes, polyesters, polycarbonates, polyacrylates, polyamides, polyimides, polyethers, polyalcohols, polysulphones, poly(sulfumitride), polysaccharide polymers, amino acid polymers, aromatic cyclic polymers, aromatic heterocyclic polymers, epoxy resins, phenolic resins, polyurethanes, thermoplastic elastomers, rubber, derivatives thereof, crosslinkers thereof, and copolymers thereof, optionally one or more selected from polyethylene, polypropylene, polystyrene, polyvinyl chloride, polyvinylidene fluoride, polytetrafluoroethylene, polyacetylene, polyethylene terephthalate, polybutylene terephthalate, polyethylene naphthalene, polycarbonate, polymethyl methacrylate, polycaprolactam, poly(hexamethylene adipamide), poly (p-phenylene terephthanlamide), polyoxymethylene, polyphenylene oxide, polyphenylene sulfide, polyethylene glycol, polyvinyl alcohol, poly-4-hydroxybenzoic acid, poly-2-hydroxy-6-naphthalenecarboxylic acid, polyaniline, polypyrrole, polythiophene, polyphenylene, sodium polystyrene sulfonate, cellulose, starch, silicone rubber, acrylonitrile-butadiene-styrene copolymers, derivatives thereof, crosslinkers thereof, or copolymers thereof;
wherein the polymer-based composite material comprises the polymer material and an additive comprising one or more selected from metallic materials and inorganic non-metallic materials.

**12.** The battery according to any one of claims 1-11, wherein the conductive layer comprises one or more selected from metallic materials, optionally one or more selected from aluminum, silver, nickel, titanium, stainless steel, aluminum alloy, silver alloy, nickel alloy, and titanium alloy.

**13.** The battery according to any one of claims 1-12, wherein $R_1$, $R_2$ and $R_3$ each independently represent a fluorine atom, trifluoromethyl, pentafluoroethyl, or heptafluoropropyl; and/or
wherein $R_1$ and $R_2$ are the same.

**14.** The battery according to any one of claims 1-13, wherein the electrolytic solution further comprises a third anion, and the third anion comprises one or more anions selected from tetrafluoroborate anion, difluorooxalate borate anion, bis(oxalate) borate anion, difluorophosphate anion, difluorobis(oxalate) phosphate anion and tetrafluoro(oxalate) phosphate anion.

**15.** The battery according to any one of claims 1-14, wherein the battery further comprises a negative electrode plate and a

separator disposed between the positive electrode plate and the negative electrode plate.

**16.** A method for preparing a battery comprising the following steps:

Step 1, assembling a battery from a positive electrode plate, a separator, a negative electrode plate and an electrolytic solution;
wherein the positive electrode plate comprises a positive electrode current collector and a positive electrode active material layer disposed on at least one surface of the positive electrode current collector, and the positive electrode current collector comprises a conductive layer;
wherein the electrolytic solution comprises a solvent and a solute being an ionic salt formed from cations and anions, wherein the cations comprise one or more selected from alkali metal cations and alkaline earth metal cations, optionally one or more selected from lithium ions, sodium ions, and potassium ions; wherein the anions comprises a first anion and a second anion, the first anion comprising an anion selected from hexafluorophosphate anion, the second anion comprising one or more anions selected from the anions shown in Formula 1 and the anions shown in Formula 2, in which $R_1$, $R_2$, $R_3$ each independently represent a fluorine atom or a fluorine-containing C1-C5 alkyl group, optionally $R_1$ and $R_2$ may be bonded into a ring;

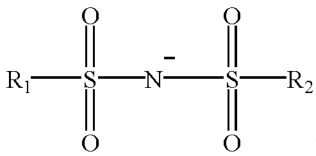
Formula 1

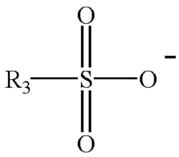
Formula 2

wherein the conductive layer has a thickness of $H_1$ μm, in the electrolytic solution the first anion has a concentration of $C_1$ mol/L, and the second anion has a concentration of $C_2$ mol/L;
Step 2, selecting, from the batteries obtained in step 1, a battery satisfying $0.2 \times (C_2/C_1) \leq H_1 \leq (C_2/C_1) + 3$, and optionally $0.2 \times (C_2/C_1) \leq H_1 \leq (C_2/C_1) + 2$.

**17.** The method according to claim 16, wherein the method further comprises Step 3, selecting, from the batteries obtained in step 2, a battery satisfying at least one of the following conditions (1) to (9):

$$(1)\ 0.2 \leq H_1 \leq 8,$$

$$(2)\ 1 \leq H_1 \leq 5,$$

$$(3)\ 0.1 \leq C_1 \leq 1,$$

$$(4)\ 0.1 \leq C_2 \leq 1.5,$$

$$(5)\ 0.5 \leq C_2 \leq 1.5,$$

$$(6)\ 0.6 \leq C_1 + C_2 \leq 2.5,$$

$$(7)\ 0.6 \leq C_1 + C_2 \leq 2.0,$$

$$(8)\ 0.1 \le C_2/C_1 \le 5,$$

$$(9)\ 0.5 \le C_2/C_1 \le 5.$$

**18.** The method according to claim 16 or 17, wherein in Step 1, the positive electrode current collector further comprises an organic support layer, the conductive layer is provided on at least one surface of the organic support layer, and the conductive layer is further provided between the organic support layer and the positive electrode active material layer, wherein the organic support layer has a thickness of $H_2$ μm, the positive electrode current collector has a total thickness of $H_0$ μm, and the positive electrode current collector has an elongation at break of $S_0$.

**19.** The method according to claim 18, wherein the method further comprises Step 4, selecting, from the batteries obtained from Step 2 or Step 3, a battery satisfying at least one of the following conditions (1) to (8):

$$(1)\ 5S_0 - (H_0/10) \le C_1/C_2 \le 100S_0 + (H_0/9),$$

$$(2)\ 0.1 \le H_1/H_2 \le 1,$$

$$(3)\ 0.2 \le H_1/H_2 \le 0.6,$$

$$(4)\ 1 \le H_2 \le 10,$$

$$(5)\ 4 \le H_2 \le 7,$$

$$(6)\ 5 \le H_0 \le 15,$$

$$(7)\ 9 \le H_0 \le 15,$$

$$(8)\ 2\% \le S_0 \le 3.5\%.$$

**20.** An electrical device comprising the battery according to any one of claims 1-15 or the battery prepared by the method according to any one of claims 16-19.

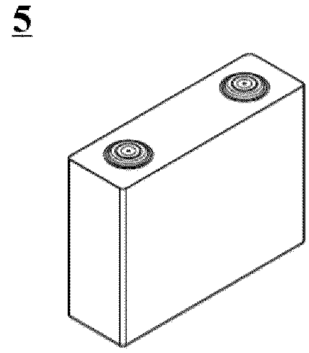


FIG. 1

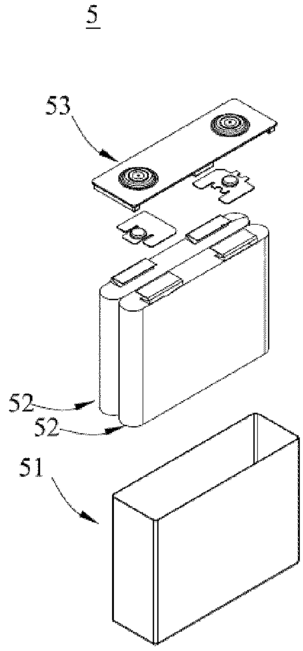


FIG. 2

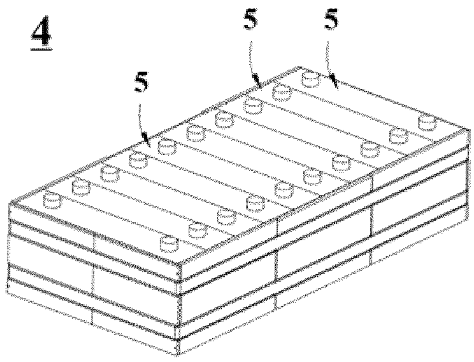


FIG. 3

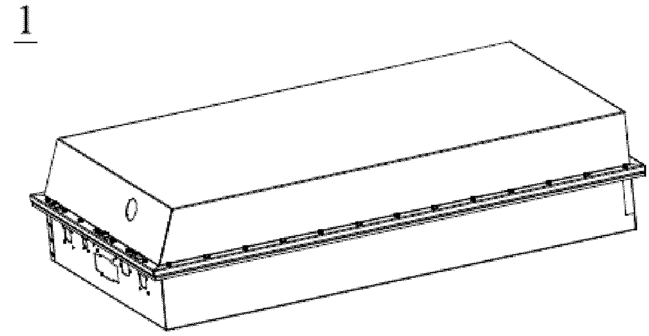


FIG. 4

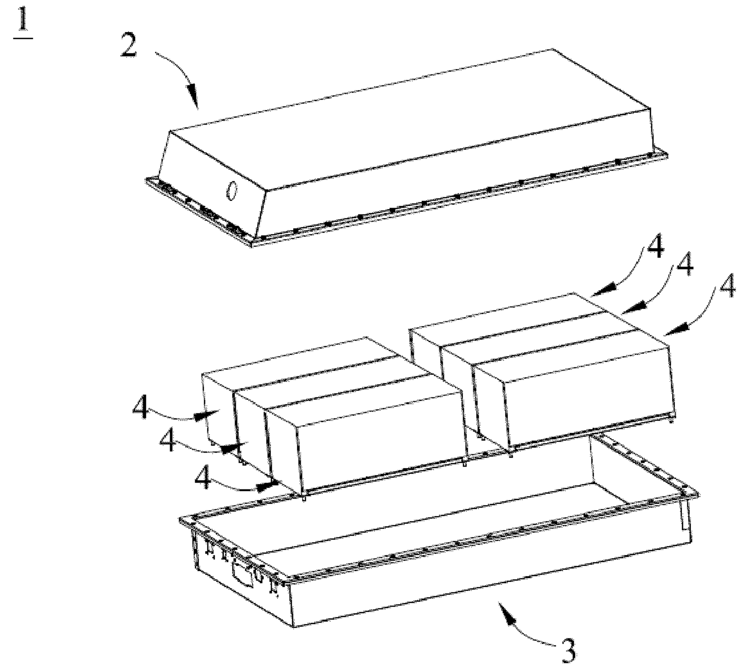


FIG. 5

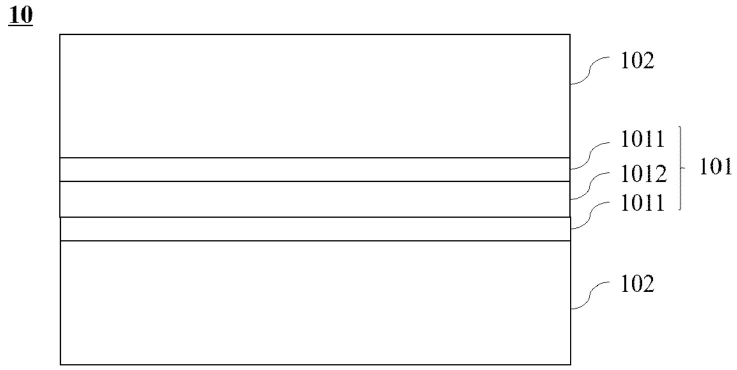


FIG.6

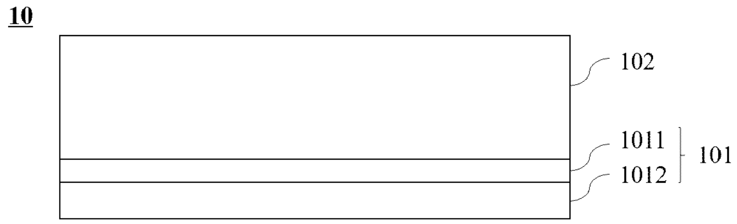


FIG.7

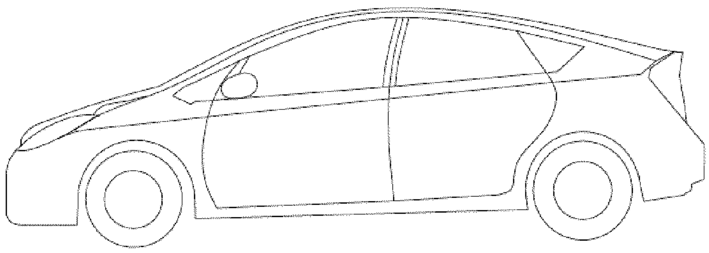

FIG.8

**INTERNATIONAL SEARCH REPORT**

International application No.
**PCT/CN2022/123586**

**A. CLASSIFICATION OF SUBJECT MATTER**

H01M10/056(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 正极, 阴极, 集流体, 导电层, 六氟磷酸锂, 双氟磺酰亚胺锂, 双三氟甲磺酰亚胺锂, 含氟磺酰亚胺锂, 含氟磺酸, 厚度, 浓度, 腐蚀, cathode, collector, conductive, layer?, LiPF6, LiFSI, LiTFSI, thickness, concentration, corrosion

**C. DOCUMENTS CONSIDERED TO BE RELEVANT**

| Category* | Citation of document, with indication, where appropriate, of the relevant passages | Relevant to claim No. |
|---|---|---|
| X | CN 113394455 A (NINGDE AMPEREX TECHNOLOGY LTD.) 14 September 2021 (2021-09-14)<br>description, paragraphs 29-136 | 1-20 |
| A | CN 109449487 A (NINGBO INSTITUTE OF MATERIAL TECHNOLOGY AND ENGINEERING, CHINESE ACADEMY OF SCIENCES) 08 March 2019 (2019-03-08)<br>entire document | 1-20 |
| A | CN 114639872 A (SHENZHEN CAPCHEM TECHNOLOGY CO., LTD.) 17 June 2022 (2022-06-17)<br>entire document | 1-20 |
| A | JP 2011082033 A (MITSUBISHI CHEMICALS CO., LTD.) 21 April 2011 (2011-04-21)<br>entire document | 1-20 |

☐ Further documents are listed in the continuation of Box C.     ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 May 2023** | **23 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2022/123586**

| Patent document cited in search report | | | Publication date (day/month/year) | Patent family member(s) | | | Publication date (day/month/year) |
|---|---|---|---|---|---|---|---|
| CN | 113394455 | A | 14 September 2021 | CN | 113394455 | B | 29 July 2022 |
| CN | 109449487 | A | 08 March 2019 | | None | | |
| CN | 114639872 | A | 17 June 2022 | | None | | |
| JP | 2011082033 | A | 21 April 2011 | | None | | |

Form PCT/ISA/210 (patent family annex) (July 2022)